# EUROPEAN PATENT APPLICATION

(11) **EP 1 148 427 A1**
(43) Date of publication of application: **24.10.2001**
(21) Application number: 00201442.1
(22) Date of filing: 21.04.2000
(51) Int. Cl.: G06F 17/30

(54) **Method of and system for creating a button type bookmark in a web browser displaying a user-selected part of the corresponding data file**

(71) Applicant: Koninklijke KPN N.V., 9726 AE Groningen (NL)
(72) Inventor: Aasman, Jannes, 2334 AV Leiden (NL); Pixley, Rolf Arnold, 1011 PL Amsterdam (NL); Willemsen, Marcus Wijnand, 1053 XJ Amsterdam (NL)
(74) Representative: Dohmen, Johannes Maria Gerardus

(57) **Abstract**

To improve access to information stored in data networks such as the World Wide Web, a method of and system for creating a button type bookmark of an addressable data file displayed on a screen of a computer device is provided comprising the steps of:
- providing a draggable representation of the button type bookmark;
- positioning this representation at part of the data file displayed on the screen;
- capturing from a screen buffer the part of the data file covered by the representation;
- copying the captured part into a data structure representing the button type bookmark; and
- storing the data structure and address information associated with the data file in a bookmarks buffer.

## Description

### Field of the Invention

The invention generally relates to data processing, search, and display systems that facilitate access to information stored in data bases, and, more particularly, for accessing large data bases of public and private networks.

### Background of the Invention

Data networks, such as the publically accessible Internet and privately accessible Intranet, provide users access to enormous amounts of information. This information is highly distributed in that it generally is stored on a plurality of world wide spreaded network servers.

These network servers are accessible through service providers which, typically, provide network support and co-ordination for users of the network, typically using personal computers, multi media work stations or other types of processing devices.

Network servers on the Internet support the Hyper Text Transfer Protocol (HTTP) that allows the transfer and display of data files stored on the network servers formatted in the HyperText Mark-up Language (HTML). The interconnection of the world wide distributed network servers is commonly referred to as the World Wide Web (WWW) and the data files transferred over the WWW are commonly referred to as web pages.

A typical web page contains data that may be displayed or reproduced by a software application, called a browser or web browser, running on the computer system of the user. The data of a web page may appear in a variety of forms, including text, graphics, images, and so on. Further, a web page may include references to other web pages or directories and sub-directories of web pages, which references are commonly called hyperlinks.

Each web page has associated with it an address, known as a Uniform Resource Locator (URL) that uniquely identifies a network server (or web server), the directory or sub-directory or other location on which a web page is stored.

In computer systems operated by a windows type operating system, access to a particular web page is typically initiated by a pointing device, such as a mouse, trackball, keyboard cursor keys, and so on. By pressing a button provided on the mouse, trackball or keyboard, the user activates the retrieval of the web page referenced by the URL.

The URL is basically a string of digits, separated by dots. In view of the enormous amount of data pages available from the WWW, current URLs contain a large number of digits. In order to ease access to web pages, in HTML format, a URL may also be identified by a string of alphanumerical characters, which are more easy to remember for users.

When a user has succeeded in finding a web page of interest, either by typing in its URL or by following hyperlinks or searching by keywords, the user may wish to be able in future to return to such web page. One commonly known method for facilitating such a return is to record the URL of a particular web page by associating to it a so-called "bookmark". Known web browsers provide users the possibility to create a hierarchy of bookmarks arranged in folders, sub-folders, and so on. These folders may be arranged alphabetically, by subject matter, following a priority scheme or otherwise. The user may then search through the collection of bookmarks to retrieve a particular web page by activating the associated bookmark.

The burden of developing such a collection of bookmarks referring to the WWW lies with the user, who has to decide on the descriptive names for stored URLs, amending the names, and so on.

It will be appreciated that similar problems of identifying web pages of interest lie with users of an Intranet and other data bases comprising addressable data files, either stored on a single or a plurality of interconnected data bases, whether or not connected to a particular data network.

Accordingly there is a need for creating bookmarks in a easy replicable, and efficient manner to provide access to information stored in files of a data base.

### Summary of the Invention

It is an object of the present invention to provide structures and methods required by users for accessing a data base or a plurality of data bases connected into a data network, for example.

According to the teachings of the present invention, in an embodiment thereof, a method is provided of creating a button type bookmark of an addressable data file displayed on a screen of a computer device including a screen buffer and a bookmarks buffer, and comprising the steps of:
- providing a draggable representation of the button type bookmark;
- positioning this representation at part of the data file displayed on the screen;
- capturing from the screen buffer the part of the data file covered by the representation;
- copying the captured part into a data structure representing the button type bookmark; and
- storing the data structure and address information associated with the data file in the bookmarks buffer.

With the novel and inventive method of the present invention, the burden of creating and collecting bookmarks of data files is greatly reduced, in that a user, for bookmarking a data file, may simply select a visually memorable part of the data file displayed on the computer screen. This, instead of having to type in or otherwise provide a descriptive name or other reference, such as an artificially created icon or the like. Advantageously, a user may select any visual part of a data file which is best referring or appealing to the user in association with the relevant data file.

In the case of a computer system operated by a windows type operating system, the draggable representation of button type bookmark is a highest level window in the hierarchy of windows to be displayed on the screen. In a preferred embodiment the representation is a transparent window such that, while dragging the window over the displayed data file, the part to be captured remains visible.

In the case of a computer device having a cursor controlled operating system, the representation of the button type bookmark may be coupled with the cursor and dragged over the screen together with the cursor. This implies that no particular application program or tool has to be provided for dragging the representation over the screen. The representation may be centred around the cursor.

It will be appreciated that the type of button representing the bookmark may have an arbitrary shape, including circular, elliptical, and polygonal geometrical shapes. Further, the bookmark may be defined as a region defining a collection of pixels either connected or disconnected. By providing, as the draggable representation, a contour of the shape of the button type bookmark, a user may precisely define and capture part of the displayed data file to be included in the bookmark.

The method according to the invention is not limited to a particular browser or network application, but may be used with any data base or data network. The method of the invention has been proven to be very advantageous for accessing data files taking the form of data pages from a data network of the type of which data can be retrieved as data pages, such as the World Wide Web (WWW). While using with the WWW, besides the captured part of the data file, to the bookmarks the Uniform Resource Locator (URL) is associated by which a selected data page is addressed within the WWW.

The draggable representation, in a preferred embodiment of the invention, is selected from an empty button type bookmark displayed on the screen of the computer device. Such that, once a part of a displayed data file has been captured, the empty bookmark is replaced by the thus created bookmark. The empty bookmark may be displayed on the screen permanently or created and displayed once a user has a need to define a link to a data file.

The method according to the invention is, however, not limited to the creation of new bookmarks. It is also provided that the contour of an already created and displayed bookmark can be selected for dragging over the computer screen, for replacing an already selected part by another part of the same data file, or for completely replacing an existing bookmark.

The steps of providing a representation for dragging, positioning, capturing and storage as disclosed above are, in a preferred embodiment of the invention, activated by operating a pointer device such as a computer mouse, a trackball, a keyboard and any other input device connected to a user's computer.

It will be appreciated that data files can be retrieved by activating a particular bookmark, again by operating a pointer device, for example by clicking a button on the mouse, a trackball, or pressing a key of a keyboard and the like.

The button type bookmarks may be organized in directories, sub-directories, sub-sub-directories or folders, which may be organized alphabetically or otherwise, by subject, frequency of use, in order to match the interest of a particular user.

The method according to the invention may be incorporated in a browser software application running on a computer device for browsing data bases.

The invention further provides a computer readable medium product, comprising a computer program arranged for operating as disclosed above.

In addition, the invention comprises a computer device having processor means, screen display means, screen buffer means, bookmarks buffer means, and input/output means arranged for operating in accordance with the method disclosed above.

The above and further advantages of the invention will be more clearly appreciated from the following detailed description when taking in conjunction with the accompanying drawings.

### Brief Description of the Drawings

Figure 1 is a schematic block diagram of a system arranged to operate following the method according to the present invention.

Figure 2 is a very schematic flow chart diagram of a portion of the method of the present invention.

### Detailed Description of the Preferred Embodiment

Although the present invention is generally applicable for retrieving data from any data network capable of providing data as addressable data files displayed on a screen of a computer device, without the intention of a limitation, the invention will now be disclosed in further detail with reference to the World Wide Web (WWW).

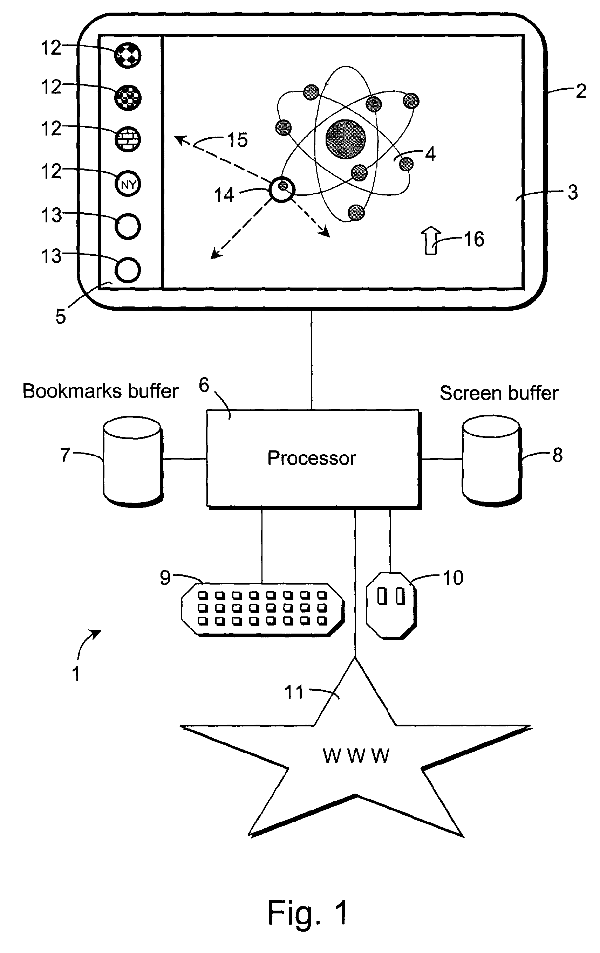

Figure 1 shows a computer system or device 1, which connects to the WWW 11.

The computer device 1 comprises a monitor 2 coupled with a processing device or processor 6. The monitor 2 comprises a screen 3 on which information is displayed, such as an image 4 provided by an addressable data file. The information displayed on the screen 3 is stored in a screen buffer 8, which connects to processor 6.

Further, on the screen 3, there is displayed a taskbar of toolbar 5 shown on the left-hand side of the Figure. The toolbar 5 comprises a plurality of button type bookmarks 12, 13. The data structures containing the bookmarks 12, 13 are stored in a bookmarks buffer 7 connected to the processor 6.

Further, keyboard means 9 and a computer mouse 10 connect to the processor 6 for inputting information and/or operating instructions. The keyboard 9 and the mouse 10 are illustrative for any other pointing device which may be connected to the processor 6, such as a trackball, touchpad, joystick and the like.

The bookmarks buffer 7 and the screen buffer 8 can be any storage medium like magnetic, optical or other storage devices. Those skilled in the art will appreciate that, in practice, the computer device 1 contains a number of other memory devices, audio devices, input/output interfaces etcetera. To ease the understanding of the invention, these other components are not further illustrated nor described.

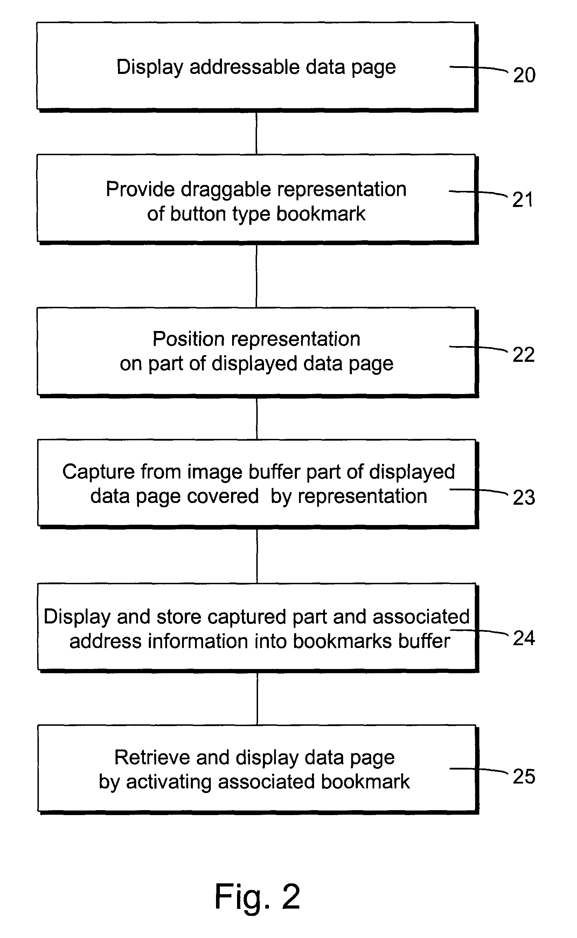

With reference to the simplified flow chart diagram of Figure 2, the presently preferred embodiment of the invention operates as follows.

It is assumed that a user, operating the computer device 1, has retrieved and displayed a data file in the form of a web page from the WWW. Such a web page may contain information in a variety of forms, including text, graphics, images, and so on. For illustrative purpose, it is assumed that the displayed data page comprises information in the form of an image 4. Block 20.

The button type bookmarks 12, 13 shown in the toolbar 5 are assumed to have a circular shape. The bookmarks 12 already contain information referring to a particular web page. The bookmarks 13 are empty bookmarks.

Assuming that a new bookmark has to be created for the data page shown on the screen 3, a representation of an empty bookmark 13 in the form of its circular contour 14 is dragged from the toolbar 5 onto the displayed data page on the screen 3. The dragging is illustratively shown by dotted arrows 15. In its preferred embodiment, the representation of contour 14 is transparent. Block 21.

As shown, the contour 14 is positioned to enclose part of the image 4. Block 22. If the user decides that the enclosed part is representative for the particular data page or appeals as much as possible to this data page, a command is provided for capturing from the screen buffer 8 the selected part of the image 4 into the contour 14. This capturing command can be provided by clicking on the mouse 10 or operating a key of the keyboard 9 or the like. Block 23.

The captured part of the image 4 is then copied into a data structure representing the particular button type bookmark from which the contour 14 has been taken. This data structure, associated with address information of the data page or data file is then stored in the bookmarks buffer 7, under the operation of the processor 6. In the case of a data page retrieved from the WWW, the address information is the Uniform Resource Locator (URL) by which the data page is addressable.

As a result of the above operation, a new bookmark is created on the tool bar 5 displaying the selected and captured part of the image 4 and stored, such that by activating the thus created bookmark, for example by clicking thereon with the mouse 10, the associated data page will be retrieved from a data network server of the WWW 11.

In the same manner as described above for creating a new bookmark from an empty bookmark 13, for example, the content of an existing bookmark 12 may be changed by dragging its contour onto a new part of the corresponding data page or the particular bookmark may be replaced by a completely new bookmark referring to a different data page.

Dragging of the contour 14 of a bookmark 12, 13 can take place in the same manner as dragging a cursor 16 by the mouse 10 or the arrow keys on the keyboard 9, for example. In a preferred embodiment of the invention, the contour 14 is coupled to the cursor 16, for example centred around the cursor 16. Such that for dragging the contour 14 the same software application for moving the cursor 16 over the screen 3 can be applied.

In a windows type operating system, the representation or contour 14 is a window on the highest layer of multi layer windows, with a special contents region consisting of the contour 14.

In the preferred embodiment of the invention, with the contour 14 any part of the screen 3 can be captured, including text, graphics, or other information identifying a particular data page or data file displayed.

The button type bookmarks 12, 13 can be organized into files or folders, sub-files or sub-folders, etcetera.

Instead of a circular shape, the button type bookmarks 12, 13 may take any geometrical form, including elliptical and polygonal shapes. The representation 14 is preferably the contour of such shape, however any other arbitrary part of the applicable bookmark may be selected or a representation or contour 14 which does not depend on the particular shape of a bookmark at all.

The present invention provides users an easy to use tool for accessing a data base, either a data base of a data network or a stand-alone data base which even can be a data base of the computer device 1 itself, such as a hard disc drive connected to the processor 6 (not shown). This, because the button type bookmark according to the present invention appeals directly to visual memory of the user in relation to a particular displayed data file.

It will be appreciated that the invention is not restricted to the embodiment shown and discussed. Numerous other embodiments and modifications thereof are contemplated as falling within the scope of the present invention as defined by the appended claims and equivalences thereof.

## Claims

1. A method of creating a button type bookmark of an addressable data file displayed on a screen of a computer device including a screen buffer and a bookmarks buffer, **characterized in that** said method comprises the steps of:
- providing a draggable representation of said button type bookmark;
- positioning said representation at part of said data file displayed on said screen;
- capturing from said screen buffer said part of said data file covered by said representation;
- copying said captured part into a data structure representing said button type bookmark; and
- storing said data structure and address information associated with said data file in said bookmarks buffer.

2. A method according to Claim 1, wherein said representation of said button type bookmark is a high level window in a multi level windows computer operating system.

3. A method according to Claim 2, wherein said representation is a transparent window.

4. A method according to Claims 1 - 3, wherein said computer device is cursor controlled and said representation is coupled to said cursor.

5. A method according to Claim 4, wherein said representation is centred around said cursor.

6. A method according to Claims 1 - 5, wherein said representation takes the form of a contour of said button type bookmark.

7. A method according to Claim 6, wherein said contour is selected from a group of circular, elliptical, and polygonal geometrical shapes.

8. A method according to Claim 6, wherein said contour is a region defining a collection of pixels.

9. A method according to Claims 1 - 8, wherein said data file is a data page of a data network of the type from which data can be retrieved as data pages.

10. A method according to Claim 9, wherein said data network is the World Wide Web (WWW) and said bookmarks comprise Uniform Resource Locators (URLs) by which said data pages are addressable.

11. A method according to Claims 1 - 10, wherein said representation is taken from a button type bookmark displayed on said screen of said computer device.

12. A method according to Claims 1 - 11, wherein said dragging, positioning, capturing, and storage steps are activated by operating a pointer device including a mouse, trackball, keyboard, and other input device connected to said computer device.

13. A method according to Claim 12, wherein a data file is retrieved by activating a particular bookmark.

14. A method according to Claims 1 - 13, wherein said bookmarks are organized in directories.

15. A browser software application for browsing data bases arranged for operating in accordance with the method of any of the Claims 1 - 14.

16. A computer readable medium product comprising a computer program arranged for operating in accordance with any of the Claims 1 - 15.

17. A computer device comprising processor means, screen display means, screen buffer means, bookmarks buffer means, and input/output means arranged for operating in accordance with any of the Claims 1 - 16.
